# EUROPÄISCHE PATENTANMELDUNG

(11) **EP 0 947 946 A2**
(43) Veröffentlichungstag der Anmeldung: **06.10.1999**
(21) Anmeldenummer: 99105964.3
(22) Anmeldetag: 24.03.1999
(51) Int. Cl.: G06K 9/36

(54) **Verfahren und Vorrichtung zum Vergleich eines ersten Musters mit einem Testmuster**

(30) Priorität: 30.03.1998 DE 19814110
(71) Anmelder: SIEMENS AKTIENGESELLSCHAFT, 80333 München (DE)
(72) Erfinder: Schreyer, Angela, 82515 Wolfratshausen (DE); Suda, Peter, 81667 München (DE)

(57) **Zusammenfassung**

Um den Speicherplatzbedarf für ein abzuspeicherndes Muster zu reduzieren, wird dieses Muster einer mehrstufigen Wavelet-Transformation unterzogen und in einer Datenbank abgelegt. Eine Vorverarbeitung umfaßt die Schritte des Drehens des Musters in eine vorgegebene Richtung, des Abschneidens von Bildteilen, die keine Information enthalten, und des Normierens auf eine vorgegebene Größe. Dadurch wird gewährleistet, daß die Transformation auf ein vergleichbares Format aufsetzt und die Muster der Datenbank signifikante Information zur Wiedererkennung des jeweiligen Musters umfassen.

## Beschreibung

Die Erfindung betrifft ein Verfahren und eine Vorrichtung Verfahren zum Vergleich eines ersten Musters mit einem Testmuster

Ein Verfahren und eine Vorrichtung zur Bearbeitung eines Musters ist aus [2] bekannt. Dort wird ein Muster, bevorzugt ein Bild, bearbeitet, insbesondere komprimiert, indem das Bild integriert und einer zweidimensionalen Tiefpaßfilterung unterzogen wird. Trotz Komprimierung wird eine brauchbare Wiedererkennung des Musters erreicht, sofern die Größe des komprimierten Bildes zumindest 40 x 40 Pixel (Bildpunkte), im Vergleich zu einem Anfangsmuster in der Größe von 200 x 200 Pixel, erreicht.

Zur Erkennung eines Musters, z.B. eines gedruckten Bildes, das digitalisiert und einem Rechner zugänglich gemacht worden ist, wird ein Vergleich dieses Musters mit Mustern einer Bilddatenbank durchgeführt. Da ein zweidimensionales Muster, abhängig von einer vorgegebenen Auflösung, eine beträchtliche Menge an Speicherplatz erfordert und weiterhin ein Vergleich zweier solcher Bilder auf Basis derer Bildpunkte entsprechende Anforderung an die Rechenleistung des Rechners stellt, soll ein komprimiertes Bild als Muster für eine Datenbank erstellt werden.

Eine Wavelet-Transformation ist aus [1] oder [3] bekannt. Der allgemeine Fall einer Wavelet-Packet-Transformation ist aus [1] bekannt. Nachfolgend wird mit dem Begriff der Wavelet-Transformation auch die allgemeinere Wavelet-Packet-Transformation umfaßt.
Eine eindimensionale Wavelet-Transformation erfolgt bevorzugt in mehreren Transformationsstufen, wobei eine Transformationsstufe ein Muster in einen Hochpaß- und einen Tiefpaßanteil unterteilt. Der jeweilige Hochpaß- bzw. Tiefpaßanteil weist vorzugsweise eine gegenüber dem Muster reduzierte Auflösung auf (engl. Fachbegriff: Subsampling, d.h. verminderte Abtastrate, dadurch reduzierte Auflösung). Aus dem Hochpaß- und dem Tiefpaßanteil kann das Muster rekonstruiert werden. Dies wird insbesondere durch die spezielle Form der bei der Transformation verwendeten Transformationsfilter gewährleistet.
Eine Wavelet-Transformation kann eindimensional, zweidimensional oder mehrdimensional erfolgen. Im zwei- bzw. mehrdimensionalen Fall entstehen neben dem Tiefpaß- und dem Hochpaßanteil auch gemischte Anteile.

Die **Aufgabe** der Erfindung besteht darin, ein Verfahren und eine Vorrichtung zur Bearbeitung eines Musters anzugeben, wobei eine Komprimierung mit hoher Wiedererkennung erreicht wird, ohne daß die Größe des komprimierten Bildes oberhalb des genannten Wertes (40 x 40 Pixel) liegen muß.

Diese Aufgabe wird gemäß den Merkmalen der unabhängigen Patentansprüche gelöst.

Es wird ein Verfahren zum Vergleich eines ersten Musters mit einem Testmuster, bei dem insbesondere das erste Muster eine digitalisierte Abbildung eines Objektes ist, angegeben. Dabei wird eine Vorverarbeitung des ersten Musters durchgeführt und das erste Muster einer Wavelet-Transformation mit einer vorgegebenen Anzahl von Transformationsstufen unterzogen und als ein zweites Muster abgespeichert. Das Testmuster wird mit dem zweiten Muster verglichen, indem folgende Schritte durchgeführt werden:
a) Das Testmuster wird der Vorverarbeitung unterzogen;
b) das Testmuster wird einer Wavelet-Transformation mit der vorgegebenen Anzahl an Transformationsstufen unterzogen;
c) das vorverarbeitete und wavelet-transformierte Testmuster wird mit dem zweiten Muster verglichen.

Dabei ist es insbesondere von Vorteil, daß durch jede Transformationsstufe der Wavelet-Transformation der für das zweite Muster benötigte Speicherplatz deutlich abnimmt (Subsampling).

Insbesondere sei darauf hingewiesen, daß die digitalisierte Abbildung sowohl eine Aufnahme eines zweidimensionalen Objektes oder eines dreidimensionalen Objektes sein kann. Es kann auch eine mehrdimensionale Wavelet-Transformation angewandt werden, so daß als das zweite Muster ein mehrdimensionaler, insbesondere ein dreidimensionaler, Repräsentant des ersten Musters abgespeichert wird.

Die Vorverarbeitung kann mindestens einen der folgenden Schritte, insbesondere in der angegebenen Reihenfolge, umfassen:
a) Das erste Muster wird in eine Richtung einer zugehörigen Hauptachse gedreht;
b) unwesentliche, keine Information enthaltene Anteile des ersten Musters werden abgeschnitten;
c) es wird eine Normierung der Größe des Musters durchgeführt.

Ein Vorteil der Vorverarbeitung besteht darin, daß zur Abspeicherung des sich nach der Wavelet-Transformation ergebenden zweiten Musters möglichst nur Teile des Musters, die Information enthalten, abgespeichert werden. Durch die Drehung (vgl. Schritt a) und die Normierung der Größe (vgl. Schritt c) wird das jeweilige Muster in eine bestimmte Ausrichtung gedreht und auf eine bestimmte, insbesondere mit anderen Mustern vergleichbare Größe gebracht.

Eine Weiterbildung besteht darin, daß bei der Wavelet-Transformation in jeder Transformationsstufe jeweils ein Tiefpaßanteil bestimmt und als Eingabe für die folgende Transformationsstufe herangezogen wird.

Auch ist es möglich Hoch-, Tiefpaßanteile und gemischte Anteile zusammen oder ggf. nur Hochpaßanteile zu berücksichtigen.

Somit kann, entsprechend der Anzahl der Transformationsstufen, der Tiefpaßanteil der letzten Transformationsstufe als zweites Muster abgespeichert werden.

Im Rahmen einer zusätzlichen Weiterbildung werden mehrere erste Muster komprimiert und die dabei gewonnenen zweiten Muster, denen vorzugsweise verschiedene digitalisierte Abbildungen zugrundeliegen, in einer Datenbank abgespeichert.

Das Testmuster kann mit dem zweiten Muster verglichen werden, indem eine punktweise Zuordnung von Bildpunkten des zweiten Musters zu Bildpunkten des Testmusters bestimmt wird.

Eine zusätzliche Weiterbildung der Erfindung besteht darin, daß das Testmuster als zu dem zweiten Muster gleich erkannt wird, falls sich das Testmuster und das zweite Muster um weniger als einen vorgegebenen Schwellwert unterscheiden. Ansonsten sind das Testmuster und das zweite Muster verschieden.

Daneben kann auch eine (stufenlose) Bewertungszahl einer Übereinstimmung des Testmusters mit dem zweiten Muster angegeben werden, indem beispielsweise die Bewertungszahl eine prozentuale Angabe für eine Übereinstimmung darstellt.

Ferner ist es möglich, daß das Testmuster stets dem am besten passenden zweiten Muster der Datenbank zugeordnet wird. In diesem Fall wird die Zuordnung getroffen, auch wenn ein schlechtes zweites Muster als dem Testmuster zugeordnet bestimmt wird.

Wahlweise können auch mehrere am besten passende Muster dargestellt werden. So kann ein Benutzer die letzte Entscheidung treffen, welches der n besten Muster seiner Meinung nach das richtige ist. Dabei werden die besten passenden Muster vorzugsweise der Bewertungszahl nach sortiert.

Eine zusätzliche Weiterbildung der Erfindung besteht darin, daß das Verfahren insbesondere zur Identifikation von mindestens einem geschriebenen oder gedruckten Objekt verwendet wird.

Das Objekt kann mindestens eine der folgenden Komponenten sein:
- Ein gedrucktes oder geschriebenes Objekt, insbesondere ein Einzelwort, eine Briefmarke, eine Grafik oder ein gestempeltes Bild;
- ein digitalisiertes Bild eines Objekts, insbesondere ein Gegenstand aus industrieller Fertigung oder eine Aufnahme eines realen, dreidimensionalen Gegenstandes.

Auch wird eine Vorrichtung zur Bearbeitung eines ersten Musters angegeben, welches Muster eine digitalisierte Abbildung eines Objektes ist, mit einer Prozessoreinheit, die derart eingerichtet ist, daß das erste Muster einer Wavelet-Transformation mit einer vorgegebenen Anzahl von Transformationsstufen unterzogen und als ein zweites Muster abgespeichert wird.

Die Vorrichtung ist insbesondere geeignet zur Durchführung des erfindungsgemäßen Verfahrens oder einer seiner vorstehend erläuterten weiterbildungen.

Weiterbildungen der Erfindung ergeben sich auch aus den abhängigen Ansprüchen.

Die Erfindung eignet sich zur Erkennung von Geschäftsbriefen, die ein aufgedrucktes, vorgegebenes Layout aufweisen und anhand dieses Layouts vorsortiert werden können. Oft sind auf Geschäftsbriefen Firmenlogos vorhanden, die sich zur Vorsortierung bzw. Wiedererkennung eignen.

Insbesondere sind auf Briefen Logos als charakteristische Bereiche vorhanden, anhand derer mit der Erfindung der Brief und damit sein Absender lediglich mit Hilfe der Bildinformation ermittelt werden kann.

Software zur Texterkennung (OCR-Software) versagt teilweise bei der Erkennung miteinander verschwommener einzelner Buchstaben. Durch die Erfindung kann eine wortweise Erkennung ermöglicht werden, wobei es keine Rolle spielt, daß einzelne Buchstaben miteinander verschliffen sind.

Ausführungsbeispiele der Erfindung werden nachfolgend anhand der Zeichnung dargestellt und erläutert.

Es zeigen
- Fig.1: ein Blockdiagramm zur Bearbeitung eines ersten Musters und Abspeichern eines zweiten Musters;
- Fig.2: ein Blockdiagramm zur Bearbeitung eines Testmusters und zum Vergleich des zweiten Musters mit dem bearbeiteten Testmuster;
- Fig.3: eine Skizze, die Stufen einer Vorverarbeitung darstellt;
- Fig.4: ein zweites Muster, das in einer Datenbank abgespeichert wird;
- Fig.5: Stufen einer eindimensionalen Wavelet-Transformation, wobei von einer Transformationsstufe zur nächsten Transformationsstufe eine Reduktion der Auflösung erfolgt;
- Fig.6: eine Prozessoreinheit;
- Fig.7: Stufen einer zweidimensionalen Wavelet-Transformation;
- Fig.8: eine zweidimensionale Zerlegung bei der Wavelet-Transformation.

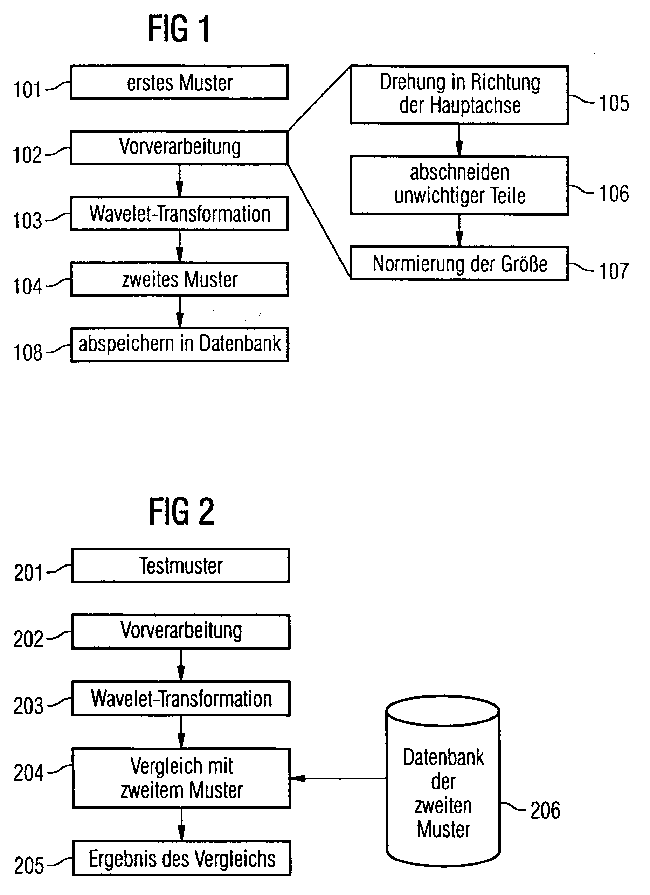

**Fig.1** zeigt ein Blockdiagramm zur Bearbeitung eines ersten Musters und zum Abspeichern eines zweiten Musters.

Ein erstes Muster 101 wird einer Vorverarbeitung 102 unterzogen, welche Vorverarbeitung 102
- eine Drehung des ersten Musters in Richtung der Hauptachse (vgl. 105) durchführt,
- Abschnitte im ersten Muster, die keine Information enthalten, entfernt (vgl. Schritt 106) und
- eine Größennormierung des Musters (vgl. 107) durchführt.

Nach der Vorverarbeitung 102 erfolgt eine Wavelet-Transformation 103, wobei eine vorgegebene Anzahl Transformationsschritte durchgeführt wird. Das vorverarbeitete und wavelet-transformierte erste Muster wird als ein zweites Muster (vgl. Schritt 104) abgespeichert. Insbesondere werden mehrere zweite Muster in einer Datenbank (vgl. Schritt 108) abgelegt. Bei der Wavelet-Transformation 103 erfolgt pro Transformationsstufe eine Aufspaltung in einen Tiefpaßanteil, einen Hochpaßanteil und zwei oder mehrere gemischte Anteile, wobei bei der Wavelet-Transformation jeder dieser Anteile in der nächsten Transformationsstufe weiter zerlegt wird (vgl. [1]). Bei jedem der Transformationsschritte der Wavelet-Transformation 103 erfolgt zusätzlich ein sogenanntes "Subsampling" , bei dem das vor dem Transformationsschritt vorliegende Muster nach der Filterung mit dem Wavelet-Filter unterabgetastet wird, also ein entsprechend niedriger aufgelöster Tiefpaßanteil (oder Hochpaßanteil) abgespeichert werden. Somit ergibt sich pro Transformationsschritt eine Reduzierung der Auflösung des Musters, was in einer reduzierten Anforderung an den Speicherplatz resultiert.

**Fig.2** zeigt ein Blockdiagramm zur Bearbeitung eines Testmusters und zum Vergleich des zweiten Musters mit dem bearbeiteten Testmuster.

Das Testmuster 201 wird einer Vorverarbeitung 202, die vorzugsweise identisch zur Vorverarbeitung 102 aus Fig.1 ist, unterzogen. Anschließend wird eine Wavelet-Transformation 203 auf das vorverarbeitete Testmuster angewandt, wobei eine vorgegebene Anzahl an Transformationsstufen abgearbeitet wird. Das Testmuster wird in einem Schritt 204 mit dem zweiten Muster (aus Fig.1) aus einer Datenbank 206 verglichen und das Ergebnis des Vergleichs in einem Schritt 205 dargestellt.

Der Vergleich der Muster in dem Schritt 204 erfolgt insbesondere auf Grundlage einzelner Bildeinheiten der jeweiligen Muster. Da das zweite Muster durch die beschriebene Wavelet-Transformation nur geringen Speicherumfang hat und infolgedessen geringe Anforderung an den Speicherplatz stellt, erfolgt bevorzugt ein Vergleich auf Basis der jeweiligen Bildpunkten (Pixel). Dazu ist das Testmuster auf das gleiche Format des zweiten Musters zu bringen, wobei insbesondere eine Normierung der Bildgröße durchgeführt wird. Die gleiche Vorverarbeitung, sowohl für das erste Muster als auch für das Testmuster, bietet eine gute Voraussetzung für den Vergleich der aus dem Testmuster bzw. aus dem ersten Muster hervorgegangenen vorverarbeiteten und transformierten Muster.

Ergibt der Vergleich einen Unterschied zwischen dem transformierten und vorverarbeiteten Testmuster und dem zweiten Muster, welcher Unterschied größer als ein vorgegebener Schwellwert ist, so werden die beiden Muster als nicht gleich klassifiziert. Ansonsten wird eine Übereinstimmung der beiden Muster angezeigt. Bevorzugt erhält man den Unterschied zwischen zwei Mustern, indem ein Abstandsmaß zwischen Werten für die jeweiligen Bildpunkte beider Muster kumuliert werden.

Alternativ wird das Testmuster einem am besten passenden Muster aus der Datenbank 206 zugeordnet. Eine andere Alternative beinhaltet die Ausgabe einer Bewertungszahl, die angibt, wie gut das Testmuster auf ein zweites Muster bzw. auf mehrere zweite Muster paßt.
Dazu wird in einem Vergleich zwischen dem transformierten und vorverarbeiteten Testmuster und dem zweiten Muster eine Ähnlichkeit ermittelt, indem in einem Abstandsmaß Distanzen zwischen Werten einander zuordenbarer Bildpunkte beider Muster kumuliert werden. Dabei ist die Ähnlichkeit zweier Muster um so größer, je kleiner der sich ergebende Wert des Abstandsmaßes ist.

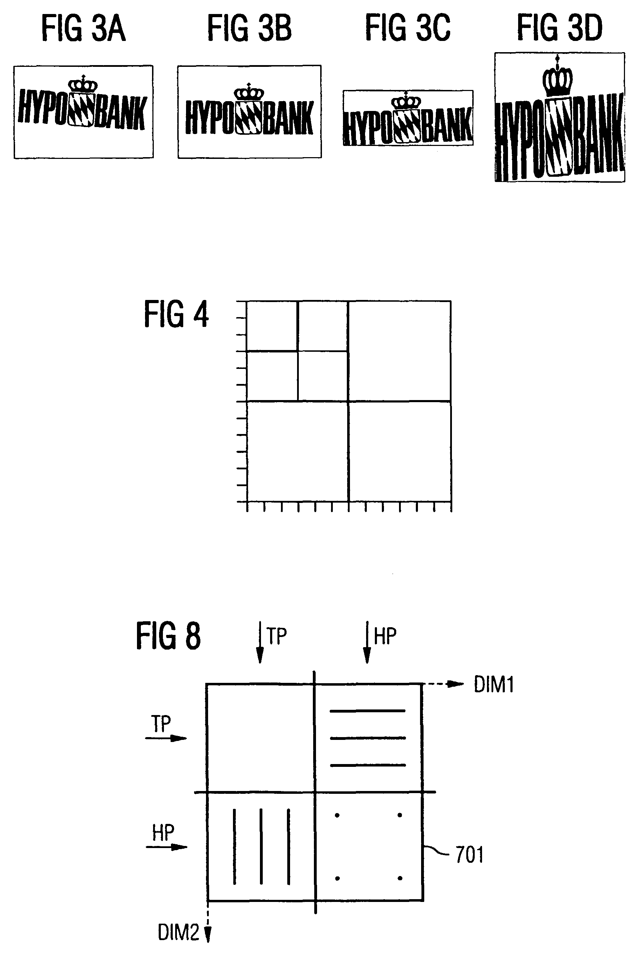

**Fig.3** zeigt eine Skizze, die Stufen einer Vorverarbeitung darstellt.

In Fig.3A ist beispielhaft ein Muster im Original mit einer Größe von 558 x 229 Pixel dargestellt. Auffällig ist dabei die abfallende Orientierung des Musters. In Fig.3B ist das Muster nach einer Rotationsnormierung dargestellt, das Muster ist nun horizontal, nahezu ohne Neigung, in seiner Hauptrichtung (entlang seiner Hauptachsen) orientiert. Fig.3C zeigt das Muster nach dem Abschneiden von Teilen, die keine Information enthalten. Solche Teile sind im angeführten Beispiel weiße Flächen, wobei als kleinste informationsenthaltende Fläche ein rechteckiger Rahmen um das Muster ermittelt wird. Fig.3D zeigt das Muster nach Durchführung einer Größennormierung auf 200 x 200 Pixel.

Diese Vorverarbeitung gewährleistet, daß Muster, die aus unterschiedlichen Quellen stammen, vor der Wavelet-Transformation in ein einheitliches Format überführt werden. Die in Fig.3 angegebenen Werte entspringen einer beispielhafte Annahme und können durch andere Werte ersetzt werden.

**Fig.4** zeigt ein zweites Muster, das in einer Datenbank abgespeichert wird.

Das größennormierte Muster aus Fig.3D wird nach der Vorverarbeitung einer Wavelet-Transformation unterzogen. Dabei wird insbesondere das mit jedem Transformationsschritt der Wavelet-Transformation erzeugte Tiefpaßmuster weiter benutzt. Durch Anwendung der Wavelet-Transformation bis zur n-ten Auflösungsstufe (das entspricht n Transformationsschritten) wird insbesondere das letzte (nach der letzten Transformationsstufe entstehende) Tiefpaßmuster als zweites Muster abgespeichert. Fig.4 zeigt beispielhaft das abzuspeichernde zweite Muster, das nach der Vorverarbeitung des Musters aus Fig.3A und der anschließenden vierstufigen Wavelet-Transformation des Musters aus Fig.3D entstanden ist.

Das in Fig.4 gezeigte zweite Muster umfaßt 12 x 12 Pixel und impliziert somit eine gegenüber Fig.3D (200 x 200 Pixel) bzw. Fig.3A (558 x 229 Pixel) drastische Einsparung an Speicherplatz. Sammelt man zahlreich zweite Muster in einer Datenbank, so potenziert sich der Speicherplatzgewinn pro zweitem Muster bei entsprechend vielen zweiten Mustern.

Um ein Testmuster zu klassifizieren, wird das vorverarbeitete und transformierte Testmuster mit jedem zweitem Muster der Datenbank verglichen. Dazu wird insbesondere ein Abstand der jeweils zu vergleichenden Muster (also des vorverarbeiteten und transformierten Testmusters mit dem jeweiligen zweiten Muster) berechnet. Solch ein Abstand ist bevorzugt ein kumuliertes Abstandsmaß, das für alle Bildpunkte der zu vergleichenden Muster als jeweiliger Unterschied kumuliert berechnet worden ist. Das Testmuster wird dem zweiten Muster aus einer Menge zweiter Muster (der Datenbank) zugeordnet, das den geringsten Abstand zu dem Testmuster aufweist.

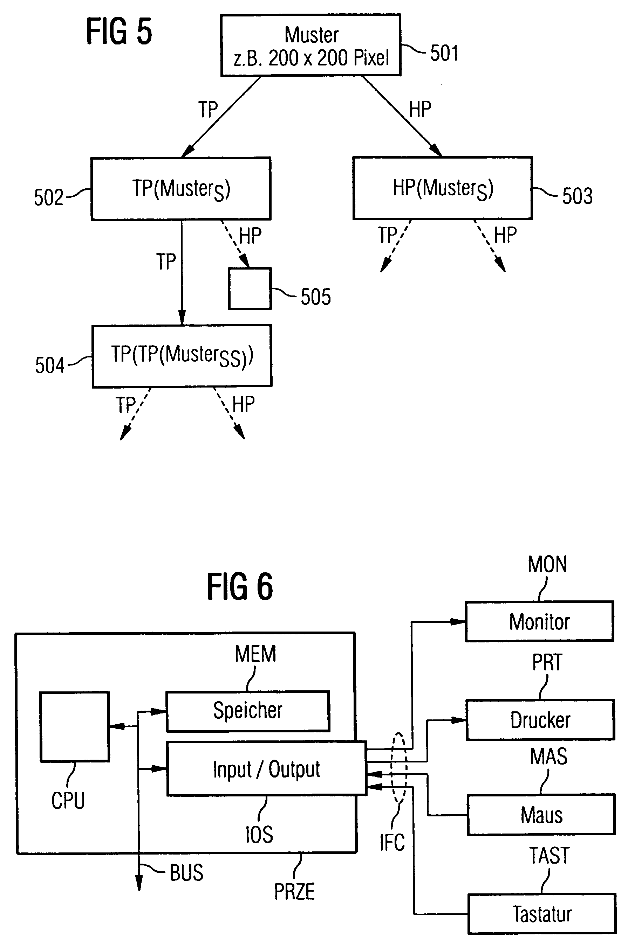

**Fig.5** zeigt Stufen einer eindimensionalen Wavelet-Transformation, wobei von einer Transformationsstufe zur nächsten Transformationsstufe eine Verringerung der Auflösung erfolgt. Die Skizze von Fig.5 enthält zur Veranschaulichung eine Transformationspyramide. Ein an der Spitze der Pyramide vorhandenes Muster 501 wird mittels eines Wavelet-Filters in einen Tiefpaßanteil TP und einen Hochpaßanteil HP zerlegt, wobei zusätzlich eine Reduzierung der Auflösung (Subsampling) erfolgt. Das Muster 501 wird in einen Tiefpaßanteil TP(Muster_{S}) 502 und einen Hochpaßanteil HP(Muster_{S}) aufgeteilt. Der Tiefpaßanteil 502 erster Ordnung des Musters 501 weist somit, ebenso wie der Hochpaßanteil 503 erster Ordnung des Musters 501, eine gegenüber dem Muster 501 reduzierte Auflösung auf und stellt somit jeweils eine geringere Anforderung an den zur Verfügung gestellten Speicherplatz. Nun wird auf dem Tiefpaßanteil 502 erster Ordnung erneut die Wavelet-Transformation durchgeführt werden, es ergeben sich wieder ein Tiefpaßanteil TP(TP(Muster_{SS})) 504 und ein Hochpaßanteil 505 zweiter Ordnung, wobei jeweils gegenüber dem Anteil erster Ordnung nochmals eine Reduktion der Auflösung erzielt wird. Nach diesem Schema läßt sich die Pyramide fortsetzen.

Abhängig von zu verarbeitendem Datenmaterial wird derjenige Anteil der Wavelet-Transformation, abhängig von einer vorgebbaren Transformationsstufe, ermittelt, der bei maximaler Einsparung von Speicherplatz ausreichend signifikante Information für eine Wiedererkennung bereitstellt.

Für Datenmaterial entsprechend dem Beispiel aus Fig.3 und Fig.4 wird bevorzugt der Tiefpaßanteil vierter Ordnung verwendet, was zu einer erheblichen Einsparung des für das zweite Muster zur Verfügung gestellten Speicherplatzes führt. Dabei umfaßt der Tiefpaßanteil vierter Ordnung ausreichend signifikante Information zum Wiedererkennen des Musters.

Alternativ können auch Kombinationen von Hochpaß-, Tiefpaß- und gemischte Anteilen (unterschiedlicher) Ordnung miteinander kombiniert abgespeichert werden, wenn in den jeweils wiederzuerkennenden Mustern auch hochfrequente Anteile signifikant sind. Insbesondere kann die Ordnung der Anteile, je nach Anforderung, variiert werden, wobei der Diskriminanz zwischen wiederzuerkennenden Mustern durch eine entsprechend höhere Auflösung Rechnung getragen wird.

In **Fig.6** ist eine Prozessoreinheit PRZE dargestellt. Die Prozessoreinheit PRZE umfaßt einen Prozessor CPU, einen Speicher SPE und eine Input/Output-Schnittstelle IOS, die über ein Interface IFC auf unterschiedliche Art und Weise nutzbar ist: Über eine Grafikschnittstelle erfolgt eine Ausgabe auf einem Monitor MON und/oder auf einem Drucker PRT. Es sind eine Maus MAS und eine Tastatur TAST vorgesehen, die jeweils über das Interface IFC mit der Input/Output-Schnittstelle IOS verbunden sind und anhand derer eine Eingabe durchführbar ist. Auch verfügt die Prozessoreinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Massenspeicher (Festplatte) oder Scanner.

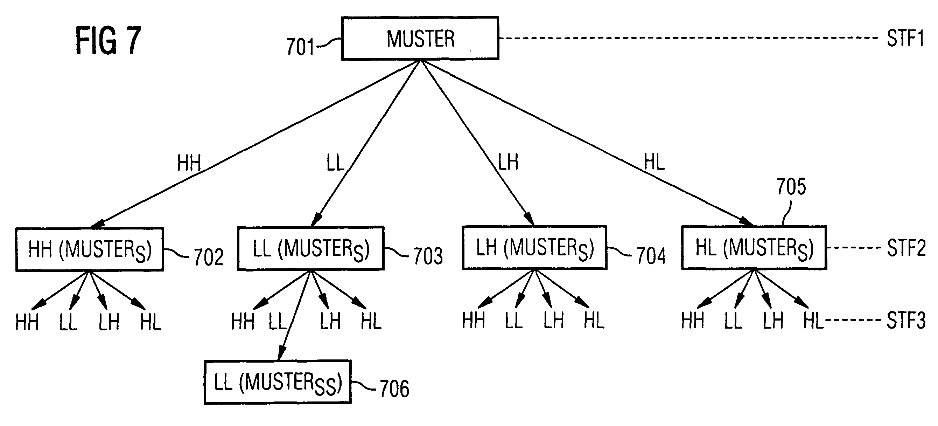

**Fig.7** zeigt Transformationsstufen einer zweidimensionalen Wavelet-Transformation, wobei von einer Transformationsstufe STF(i) zur nachfolgenden Transformationsstufe STF(i+1) eine Reduzierung der Auflösung und damit eine verringerte Anforderung an bereitzustellenden Speicherplatz gestellt wird.
Ein Muster 701 einer ersten Transformationsstufe STF1 unterteilt sich in der nachfolgenden Transformationsstufe STF2 in (Teil-)Muster 702 bis 705. Auf jedes dieser (Teil-)Muster 702 bis 705 kann die Wavelet-Transformation erneut angewandt werden, wobei sich in der Transformationsstufe STF3 jedes (Teil-)Muster 702 bis 705 wieder in jeweils vier Muster unterteilt. Dabei wird von der Transformationsstufe STF1 zur Transformationsstufe STF2 der Speicherplatzbedarf für das Muster 703 LL(MUSTER_{S}) gegenüber dem Muster 701 MUSTER um einen durch das Subsampling S vorgegebenen Faktor reduziert.
Neben den zweidimensionalen reinen Hochpaßanteilen HH und reinen Tiefpaßanteilen LL gibt es in Fig.7 noch gemischte Anteile HL und LH, die sowohl einen Hochpaß- als auch einen Tiefpaßanteil aufweisen.
Das Muster 706 LL(MUSTER_{SS}) ergibt sich aus dem Muster 701 durch zweimalige Tiefpaßfilterung LL.

In **Fig.8** ist eine zweidimensionale Zerlegung bei der Wavelet-Transformation dargestellt.
Das Muster 701 wird entlang jeder Dimension DIM1, DIM2 sowohl hochpaßgefiltert (HP) als auch tiefpaßgefiltert (TP). Es ergeben sich von einer Transformationsstufe STF1 zur nächsten Transformationsstufe STF2 vier Anteile: ein Hochpaßanteil HH, ein Tiefpaßanteil LL und zwei gemischte Anteile HL bzw. LH. Die jeweiligen Anteile entsprechen Richtungsfiltern und eignen sich, abhängig von den jeweils vorgegebenen Mustern, mehr oder minder zur Kompression. Wie bereits erläutert, wird von einer Transformationsstufe zur nächsten eine Datenreduktion durch Subsampling bewirkt.

### Literaturverzeichnis:

[1] C.K. Chui: An Introduction to Wavelets, Academic Press, 1992, Seiten 215-243.
[2] P.Suda et al.: Logo and Word Matching - Using a General Approach to Signal Registration, ICDAR 1997, Seiten 61-65.
[3] S.G. Mallat: A Theory for Multiresolution Signal Decomposition: The Wavelet Representation, IEEE Trans. on Pattern Analysis and Machine Intelligence, Vol.11, No. 7, July 1989, Seiten 674-693.

## Patentansprüche

1. Verfahren zum Vergleich eines ersten Musters mit einem Testmuster, bei dem insbesondere das erste Muster eine digitalisierte Abbildung eines Objekts ist,
a) bei dem eine Vorverarbeitung des ersten Musters durchgeführt wird;
b) bei dem das erste Muster einer Wavelet-Transformation mit einer vorgegebenen Anzahl von Transformationsstufen unterzogen und als ein zweites Muster abgespeichert wird,
c) bei dem das Testmuster mit dem zweiten Muster verglichen wird, indem folgende Schritte durchgeführt werden:
(1) das Testmuster wird der Vorverarbeitung unterzogen;
(2) das Testmuster wird einer Wavelet-Transformation mit der vorgegebenen Anzahl an Transformationsstufen unterzogen und abgespeichert;
(3) das vorverarbeitete und wavelet-transformierte Testmuster wird mit dem zweiten Muster verglichen.

2. Verfahren nach Anspruch 1,
bei dem die Vorverarbeitung mindestens einen der folgenden Schritte umfaßt:
a) das erste Muster wird in eine Richtung seiner Hauptachse gedreht;
b) unwesentliche, keine Information enthaltene Anteile des ersten Musters werden abgeschnitten;
c) das erste Muster wird in seiner Größe normiert.

3. Verfahren nach einem der vorhergehenden Ansprüche, bei dem bei der Wavelet-Transformation in jeder Transformationsstufe ein Tiefpaßanteil und/oder ein Hochpaßanteil und/oder mindestens ein gemischter Anteil bestimmt wird.

4. Verfahren nach Anspruch 3,
bei dem entsprechend der Anzahl der Transformationsstufen der Tiefpaßanteil der zuletzt durchgeführten Transformationsstufe als das zweite Muster abgespeichert wird.

5. Verfahren nach einem der vorhergehenden Ansprüche, bei dem mehrere zweite Muster, welche zweite Muster jeweils aus einem ersten Muster hervorgegangen sind, in einer Datenbank abgespeichert werden.

6. Verfahren nach einem der vorhergehenden Ansprüche, bei dem das Testmuster mit dem zweiten Muster verglichen wird, indem eine punktweise Zuordnung von Bildpunkten des zweiten Musters zu Bildpunkten des Testmusters bestimmt wird.

7. Verfahren nach Anspruch 6,
a) bei dem eine Zuordnung des Testmusters zu dem zweiten Muster durchgeführt wird, falls sich das Testmuster und das zweite Muster um weniger als einen vorgegebenen Schwellwert voneinander unterscheiden,
b) bei dem eine Zuordnung des Testmusters zu dem zweiten Muster nicht durchgeführt wird, falls sich das Testmuster und das zweite Muster um mehr als einen vorgegebenen Schwellwert voneinander unterscheiden.

8. Verfahren nach Anspruch 6,
bei dem eine Bewertungszahl bestimmt wird, die eine Übereinstimmung des Testmusters mit dem zweiten Muster kennzeichnet.

9. Verfahren nach Anspruch 6,
bei dem aus mehreren zweiten Mustern dasjenige Muster ausgegeben wird, das am besten zu dem Testmuster paßt.

10. Verfahren nach dem vorhergehenden Anspruch bei dem das Objekt mindestens eine der folgenden Komponenten umfaßt:
(1) ein gedrucktes oder geschriebenes Objekt, insbesondere:
a) ein Einzelwort,
b) eine Briefmarke,
c) eine Grafik,
d) ein gestempeltes Bild;
(2) ein digitalisiertes Objekt, insbesondere:
a) ein Gegenstand der industriellen Fertigung,
b) eine Aufnahme eines realen, dreidimensionalen Gegenstands.

11. Vorrichtung zur Bearbeitung eines ersten Musters, welches Muster eine digitalisierte Abbildung eines Objekts ist, die eine Prozessoreinheit aufweist, die derart eingerichtet ist, daß ein Verfahren nach einem der Ansprüche 1 bis 10 darauf ablaufbar ist.
